# EUROPEAN PATENT APPLICATION

(11) **EP 3 156 754 A1**
(43) Date of publication of application: **19.04.2017**
(21) Application number: 16721056.6
(22) Date of filing: 03.02.2016
(51) Int. Cl.: F41J 3/02, F41J 3/00, F41J 5/04, G06K 9/00

(54) **DART GAME DEVICE HAVING MULTIPLE CAMERAS AND COMPUTER PROGRAM STORED IN COMPUTER-READABLE MEDIUM**

(30) Priority: 10.08.2015 KR 20150011274
(71) Applicant: Hong International Corp., Seoul 08390 (KR)
(72) Inventor: HONG, Sang Uk, Seoul 06075 (KR)
(74) Representative: Onsagers AS
(86) International application number: PCT/KR2016/001185
(87) International publication number: WO 2017/026609

(57) **Abstract**

Disclosed is a dart game apparatus according to an embodiment of the present invention in order to implement the aforementioned object. The dart game apparatus includes: a dart target having a plurality of score areas; a sensing module configured to sense an electrical signal changed as a dart pin hits the dart target; a controller configured to control an overall operation of the dart game apparatus; and a camera module configured to include a plurality of camera units, wherein the camera module includes a first camera unit configured to photograph a throw line which is a location where a player throws a dart and a whole body of the player, a second camera unit configured to photograph at least a part of a body for identifying the player, a third camera unit configured to photograph the entirety of the dart target, and a fourth camera unit configured to photograph at least a partial area in an area formed between the throw line and the dart game apparatus in order to photograph a blind zone which is not photographed by the first camera unit, the second camera unit, and the third camera unit.

## Description

### [Technical Field]

The present invention relates to a dart game apparatus, and more particularly, to a dart game apparatus having a plurality of cameras.

### [Background Art]

In general, a dart refers to a 'small arrow' and is a game that makes marks by throwing an arrow-shaped dart pin to a centrifugal target marked with figures. The dart game has an advantage in that anybody can enjoy the dart game anytime and anywhere if there are only an arrowheaded dart and the dart target. In recent years, as various game methods have been developed and a scoring method has been organized, the dart game has been developed as worldwide leisure, and therefore, all adults and children have conveniently enjoyed the dart game.

By catching up with popularization of the dart game, a contest in which numerous players participate by getting out of just enjoying the dart game often takes place. In recent years, the dart game contest has been performed offline in most cases. In performing the offline dart game contest, a cheating preventing countermeasure up to now has been executed by a method in which a referee which directly takes responsibility for and operates a game monitors the game around a dart boardby being entrusted with an authority from world dart federation (WDF) and Korea darts federation (KDF).

In recent years, the trend has been that an online dart game contest gradually increases in addition to the offline dart game contest. However, since the referee cannot be arranged for each place in order to perform the online dart game contest, the online dart game contest is performed at a predetermined place where the referee is arranged. Since the online dart game contest which is performed as such causes a problem of spatial limitation, there is no difference from the offline dart game. Consequently, in providing the online dart game contest to the players through the aforementioned problem, temporal and spatial efficiency which can occur cannot be provided and the online dart game contest depends on subjective cheating reading information (that is, accurate data regarding a cheating result) of the referee, and as a result, transparency of a reading process cannot also be provided.

Japanese Patent No. JP5428007B9 discloses a game apparatus having a pickup means and in detail, presents a technical feature that can photograph the player through the camera and output the photographed image through a display unit.

In order to solve the aforementioned problem, there is a need for providing an apparatus for reading the cheating to the dart game apparatus in order to strengthen the temporal and spatial efficiency in performing the online dart game contest. Further, there is a need for developing an apparatus for securing information for reading the cheating in the art.

### [Disclosure]

### [Technical Problem]

The present invention has been made in an effort to provide temporal and spatial efficiency in performing an online game contest by constituting a plurality of camera modules in a dart game apparatus.

The present invention has been made in an effort to efficiently prevent a cheating of a dart game player by collecting motion pictures photographed from the plurality of camera modules.

### [Technical Solution]

According to an embodiment of the present invention, disclosed is a dart game apparatus. The dart game apparatus may include: a dart target having a plurality of score areas; a sensing module configured to sense an electrical signal changed as a dart pin hits the dart target; a controller configured to control an overall operation of the dart game apparatus; and a camera module configured to include a plurality of camera units, wherein the camera module includes a first camera unit configured to photograph a throw line which is a location where a player throws a dart and a whole body of the player, a second camera unit configured to photograph at least a part of a body for identifying the player, a third camera unit configured to photograph the entirety of the dart target, and a fourth camera unit configured to photograph at least a partial area in an area formed between the throw line and the dart game apparatus in order to photograph a blind zone which is not photographed by the first camera unit, the second camera unit, and the third camera unit.

According to another embodiment of the present invention, disclosed is a computer program stored in a computer-readable medium, which allows a computer to perform the following steps. Herein, the steps may include photographing at least a partial area in a front area of a dart game apparatus by using a camera module including a plurality of camera units; and sensing an electrical signal changed as a dart pin hits a dart target having a plurality of score areas, wherein the camera module includes a first camera unit configured to photograph a throw line which is a location where a player throws a dart and a whole body of the player, a second camera unit configured to photograph at least a part of a body for identifying the player, a third camera unit configured to photograph the entirety of the dart target, and a fourth camera unit configured to photograph at least a partial area in an area formed between the throw line and the dart game apparatus in order to photograph a blind zone which is not photographed by the first camera unit, the second camera unit, and the third camera unit.

### [Advantageous Effects]

According to embodiments of the present invention, a plurality of camera modules is constituted in a dart game apparatus to provide temporal and spatial efficiency in performing an online dart game contest.

According to the embodiments of the present invention, motion pictures photographed from the plurality of camera modules are collected to efficiently prevent a cheating of a dart game player.

### [Description of Drawings]

Some of embodiments are illustrated in the accompanying drawings so as to appreciate features of the mentioned disclosed contents with reference to the following embodiments in detail and more concrete description. Further, similar reference numerals in the drawings are intended to designate functions which is the same or similar throughout several aspects. However, the accompanying drawings just illustrate only specific typical embodiments of the disclosed contents and are not considered to limit the scope of the present invention and it should be noted that other embodiments having the same effect can be sufficiently recognized.
FIG. 1 is a block diagram of a dart game apparatus according to an embodiment of the present invention.
FIG. 2 is an enlarged diagram illustrating a plurality of camera modules provided in the dart game apparatus according to an embodiment of the present invention.
FIG. 3 illustrates a scene of sensing and tracking a dart pin in at least one camera unit among a plurality of camera units according to an embodiment of the present invention.
FIG. 4 illustrates a motion picture splitting screen output from a display module provided in the dart game apparatus according to an embodiment of the present invention.
FIG. 5 illustrates a screen in which motion pictures are sequentially output from the display module provided in the dart game apparatus according to an embodiment of the present invention.

### [Best Mode]

Various embodiments and/or aspects are now disclosed with reference to drawings. In the following description, for description, multiple detailed matters are disclosed in order to help overall understanding of one or more aspects. However, those skilled in the art will recognize that the aspect(s) can be executed without the detailed matters. In the following disclosure and the accompanying drawings, specific exemplary aspects of one or more aspects will be described in detail. However, the aspects are exemplary and some among various methods in principles of various aspects may be used and the descriptions are intended to include all of the aspects and equivalents thereof.

Further various aspects and features will be presented by a system which can include multiple devices, components, and/or modules. It should also be appreciated and recognized that various systems can include additional devices, components, and/or modules and/or that the various systems cannot include all of devices, components, modules, and the like discussed in association with the drawings.

In "embodiment", "example", "aspect", "illustration", and the like used in the specification, it may not be construed that a predetermined described aspect or design are more excellent or advantageous than other aspects or designs. 'Component', 'module', 'module', 'system', 'interface', and the like which are terms used below can generally computer-related entities and mean, for example, hardware, a combination of the hardware and software, and the software.

Moreover, a term "or" is intended to mean not exclusive "or" but inclusive "or". That is, when not separately specified or not clear in terms of a context, the case where "X uses A or B" is intended to mean one of natural inclusive substitutions. That is, the case where "X uses A or B" may be applied to any of the case where X uses A, the case where X uses B, or the case where X uses both A and B. Further, it should be understood that a term "and/or" used in the specification designate and include all available combinations of one or more items among enumerated related items.

The word "comprises" and/or "comprising" means that the corresponding feature and/or component is present, but it should be appreciated that presence or inclusion of one or more other features, components, and/or a group thereof is not excluded. Further, when not separately specified or not clear in terms of the context by indicating a singular form, it should be construed that the singular generally means "one or more" in the specification and the claims.

Further, the terms "information" and "data" used in the specification may also be often used to be exchanged with each other. Further, the terms "client" and "player" used in the specification may also be often used to be exchanged with each other.

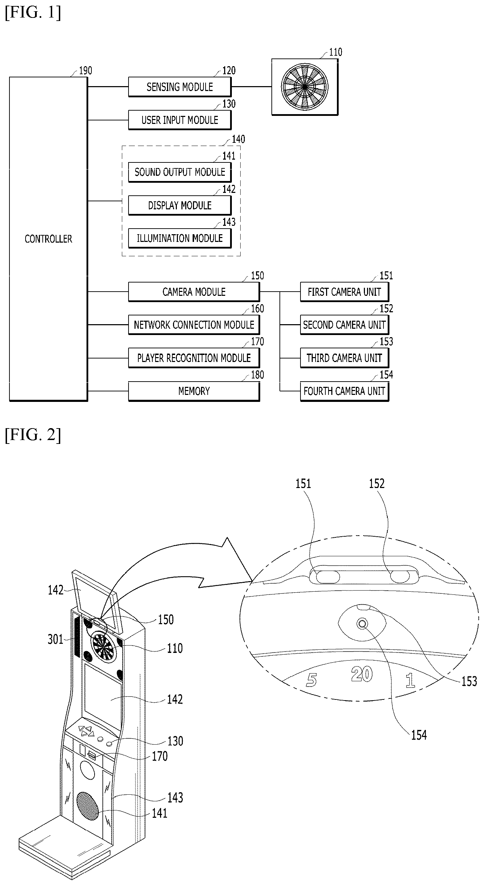

FIG. 1 is a block diagram of a dart game apparatus according to an embodiment of the present invention.

The dart game apparatus 100 according to the an aspect of the present invention may include a dart target 110, a sensing module 120, a player input module 130, an output module 140 (for example, a sound output module 141), a display module 142, an illumination module 143, a camera module 150 (for example, a first camera unit 151, a second camera unit 152, a third camera unit 153, and a fourth camera unit 154), a network connection module 160, a player recognition module 170, a memory 180, and a controller 190. The components illustrated in FIG. 1 are not essential components. Therefore, a dart game device having more components therethan or less components therethan may be implemented.

The dart target 110 may include a score board in which a bulls eye is positioned at the center and there are areas segmented by a concentric circle centering the bulls eye and straight lines extended radially from the bulls eye and granted with individual scores, respectively. A plurality of holes into which a tip of a dart may be inserted may be deployed on the score board.

The dart target 110 includes the display module 142 as described below to variably change score deployment of the dart target 110 and shapes of areas granted with the scores. In this case, the dart target 110 includes a light transmissive touch pad stacked on the display module 142 to have a form of a touch screen. Further, an edge of the dart target 110 may include the display module 142 described below.

The sensing module 120 may sense a play of a dart game player, which is performed with respect to the dart target 110. The sensing module 120 may evaluate a play of a real player. The sensing module 120 may sense an area of the dart target 110 which a thrown dart pin hits, with respect to a play in which the game player throws the dart pin. The sensing module 120 electrically converts a score corresponding to the area which the dart pin hits to transmit the converted score to the controller 190. Alternatively, the sensing module 120 may transmit an electrical signal corresponding to the area which the dart pin hits to the controller 190 and herein, a score corresponding to the electrical signal may be calculated by the controller 190.

According to the embodiment of the present invention, the dart game apparatus may include the input module 130. The input module 130 receives an input of a player for controlling the dart game apparatus 100. The input module 130 may include a keypad, a dome switch, a touch pad (resistive/capacitive), a jog wheel, a jog switch, and the like. The input module 130 may also include the camera module 150 or a microphone. Furthermore, the input module 130 may receive a player input for controlling the camera module 150. For example, the input module 130 may receive an input to adjust a focus of a motion picture photographed by the second camera unit 152 or designate and photograph a part of a body of the player from the player. Further, the input module 130 may receive an input to adjust a photographing angle and a viewing angle of the fourth camera unit 154.

Additionally, the input module 130 may also include a short range communication module (not illustrated) as described below. In the embodiment of the present invention, the input unit 130 may be configured to include the short range communication module (not illustrated) of the network connection module 160. When the input module 130 includes the short range communication module of the network connection module 160, the input module 130 may be configured to receive a player input which is input by an external console device. As short range communication technology, Bluetooth, radio frequency identification (RFID), infrared data association (IrDA), ultra wideband (UWB), ZigBee, or the like may be used. For example, when the input module 130 performs the short range communication using the infrared data association (IrDA), the external console device may be an infrared remote controller. Alternatively, when the input module 130 performs the short range communication using a Bluetooth function, the external console device may be a mobile device including a Bluetooth module. The mobile device including the Bluetooth module may be, for example, a smart phone including the Bluetooth module.

Additionally, the player may select dart pin information, a dart game mode, a game match request, a game match approval, the number of dart game players, a dart game play mode, and the like through the input module 130. For example, the player may select the number of dart game players, the dart game play mode (a zero one game, a cricket game, a count-up game, and the like), the dart game mode (a single play, a network play, and the like), the offline match making request, and the match approval through the input module 130.

The input module 130 receives a signal by sensing a key operation or a touch input of the player or receives a voice or motion through the camera module 150 or the microphone of the player to convert the received signal, voice, or motion into an input signal. To this end, a known speech recognition or motion recognition technology may be used.

According to the aspect of the present invention, the dart game apparatus may include the output module 140. The output module 140 which is used for generating an output related with sight, hearing, or touch may include a sound output module 141, a display module 142, an illumination module 143, and the like.

The sound output module 141 may output audio data received from the network connection module 160 or stored in the memory 180 in a sound effect of the game, a game motion guide, a game method description, and the like. The sound output module 141 may also output a sound signal related with a function (e.g., a game effect sound) performed by the dart game apparatus 100. The sound output module 141 may also output a voice of a game player or a third person using another dart game apparatus, which is received through the network connection module 160. The sound output module 141 may include a receiver, a speaker, a buzzer, and the like. Additionally, when a score area of the dart pin thrown by the dart game apparatus 100 is measured, information on the hit score area and/or a reward may be output as audio information by the sound output module 141. As an example, when the score area (for example, 20 points) of the dart target 110 is measured, the sound output module 141 may output a sound of information on the measured score (for example, "20", "twenty", and the like). The aforementioned sound is just an example of the present invention and another predetermined sound may be output.

According to the embodiment of the present invention, the dart game apparatus 100 may include one or more display modules 142 configured to output a plurality of motion pictures photographed by a plurality of camera units. In detail, the display module 142 may output a first motion picture 401 in which a throw line 115 and a whole body of the player are photographed by the first camera unit 151, a second motion picture 403 in which at least a part of the body is photographed by the second camera unit 152, a third motion picture 405 in which the entirety of the dart target is photographed by the third camera unit 153, and a fourth motion picture 407 in which at least a partial area in an area formed between the throw line 115 and the dart game apparatus 100 is photographed by the fourth camera unit 154. Further, the display module 142 may not output only the aforementioned motion picture but output various motion pictures. For example, the display module 142 may output a motion picture (that is, a motion picture photographed toward the dart game apparatus from the rear side of the player) acquired by photographing a front surface of the dart game apparatus 100. In this case, some camera units among the plurality of camera units included in the camera module 150 may be installed outside the dart game apparatus 100.

The display module 142 displays (outputs) information processed in the dart game apparatus 100. For example, when a dart pin 111 hits the score area of the dart target 110, the display module 142 may output the corresponding score.

The display module 142 may include at least one of a liquid crystal display (LCD), a thin film transistor-liquid crystal display (TFT LCD), an organic light-emitting diode (OLED), a flexible display, and a 3D display. Among the displays, some display modules 142 may be configured as a transparent or light transmissive type to view the outside through some displays. This may be called a transparent display module 142 and a representative example of the transparent display includes a transparent OLED (TOLED), and the like.

In the embodiment of the present invention, two or more display modules 142 may be present according to an implementation form of the dart game apparatus 100. For example, in the dart game apparatus 100, a plurality of displays may be deployed on one surface to be separated or integrally and further, deployed on different surfaces, respectively. For example, the display module 142 may include both a display disposed at an upper end of the dart target 110 and a display disposed at a lower end of the dart target 110, or may include one display thereof. However, a location where the aforementioned displays are disposed is just an example, and the displays may be disposed at various positions for a demand due to a design or a visual effect.

A touch sensor may be configured to convert a change in pressure applied to a specific portion of the display module 142 or capacitance generated at the specific portion of the display module 142 into an electrical input signal. The touch sensor may be configured to detect touch pressure as well as touched location and area. When there is a touch input for the touch sensor, a signal(s) corresponding to the touch input is(are) sent to a touch controller. The touch controller processes the signal(s) and thereafter, transmits data corresponding thereto to the controller 190. As a result, the controller 190 may recognize which area of the display module 142 is touched, and the like. In an additional aspect of the present invention, the aforementioned input module 130 may be integrated into the touch sensor of the display module 142.

The illumination module 143 outputs a signal for notifying occurrence of an event of the dart game apparatus 100. Examples of the event which occurs from the dart game apparatus 100 include identification of the dart game player, direct hit of the dart, a combo hit, determination of a player ranking, a change of the dart game player, game over, and the like. Additionally, the illumination module 143 may be constituted by a flatlight performing diffused total lighting and/or a spotlight which is a light condensing light. Further, the illumination module 143 may be constituted by a light other than the flatlight and/or spotlight. In the additional aspect of the present invention, the illumination module 143 may output an illumination effect based on the location of the hit score area of the dart pin 111 thrown by the player. As an example, the illumination module 143 may output the illumination effect when the dart pin 111 thrown by the player hits a double score, a triple score, and a bulls eye. Further, the illumination module 143 may output the illumination effect even when the dart pin 111 thrown by the player consecutively hits the double score, the triple score, and the bulls eye.

The output module 140 may also output another form other than a video signal or an audio signal, for example, a signal for notifying the occurrence of the event by vibration. In the aspect of the present invention, as illustrated in FIG. 1, the output module 140 may include the sound output module 141, the display module 142, and the illumination module 143.

According to the aspect of the present invention, the dart game apparatus 100 may include the camera module 150. The camera module 150 includes a plurality of camera units, and as a result, image frames processed by the camera units may be stored in the memory 180 or transmitted to the outside through the network connection module 160.

According to the aspect of the present invention, the camera module 150 may include the first camera unit 151, the second camera unit 152, the third camera unit 153, and the fourth camera unit 154. Herein, the first camera unit 151 may be configured to photograph the throw line 115 which is the location where the player throws the dart and the whole body of the player. Further, the second camera unit 152 may be configured to photograph at least a part of the body for identifying the player. The third camera unit 153 may be configured to photograph the entirety of the dart target. Moreover, the fourth camera unit 154 may be configured to photograph at least a partial area in the area formed between the throw line 115 and the dart game apparatus in order to photograph a blind zone which is not photographed by the first camera unit, the second camera unit, and the third camera unit. This may be a purpose for determining the cheating of the player.

According to an additional aspect of the present invention, the camera module 150 may include an additional camera unit. For example, the camera module 150 may input the information on the dart pin to the dart game apparatus by photographing the dart pin. For example, a QR code is included in the dart pin and recognized by the camera module 150, and as a result, information such asa mass, a shape, a length, a material, a maker, and the size of the dart pin may be input. The camera module 150 may include a function for receiving the information on the dart pin 111, such as a QR code reader function, or the like. Description of the camera module 150 to be described below will be made below in FIG. 2.

The network connection module 160 may include one or more modules that enable wireless communication between the dart game apparatus 100 and a wired/wireless communication system or between the dart game apparatus 100 and a network on which a predetermined dart game apparatus is positioned. In the embodiment of the present invention, the network connection module 160 may include a transmitting unit and a receiving unit. The network connection module 160 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As the wired Internet technology, digital subscriber line (XDSL), fibers to the home (FTTH), power line communication (PLC), or the like may be used.

Further, the network connection module 160 includes a short range communication module to transmit and receive data to and from an electronic apparatus positioned in a relatively short range to the dart game apparatus 100 and including the short range communication module. As short range communication technology, Bluetooth, radio frequency identification (RFID), infrared data association (IrDA), ultra wideband (UWB), ZigBee, or the like may be used. In the embodiment of the present invention, the network connection module 160 may sense a connection state of the network and a transceiving speed of the network. Data received through the network connection module 160 may be output through the output module 140, stored through the memory 180, or transmitted to other electronic apparatuses positioned in a short range through the short range communication module.

The player recognition module 170 may recognize unique information of a long-range player by using a radio wave through the radio frequency identification (RFID) technology which is a kind of the short range communication technology. For example, the player may possess a card including an RFID module, a mobile terminal, or unique dart game equipment, for example, personal dart equipment possessed thereby. Information (e.g., a personal ID, an identification code, and the like of the player registered in the database server) for identifying the player may be recorded in the RFID module possessed by the player. The dart game apparatus 100 identifies the RFID module possessed by the player to identify a dart game player which plays the game by using the dart game apparatus 100 and update a database for the identified dart game player or accumulate new data. In the embodiment of the present invention, the player recognition module 170 may be integrated into the input module 130.

The player recognition module 170 may include various technologies (e.g., the short-range communication technology such as the Bluetooth and the like) that may transmit and receive unique information of the player by a contact/non-contact method in addition to the RFID technology. Further, the player recognition module 170 may include a biodata identification module that identifies biodata (a voice, a fingerprint, and a face) of the player by interworking with the microphone of the input module 130, the touch pad, the camera module 150, and the like.

According to the aspect of the present invention, the dart game apparatus 100 may include the memory 180. The memory 180 may store a program for an operation of the controller 190 therein and temporally or permanently store input/output data (e.g., dart pin hit area data, score data, a phone book, a message, a still image, a motion picture, and the like) therein.

The memory 180 may store data regarding various patterns of vibrations and sounds output in the touch input on the touch screen. The memory 180 may include at least one storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The dart game apparatus 100 may operate in connection with a web storage performing a storing function of the memory 180 on the Internet. In the aspect of the present invention, the memory 180 may delete photographed data which is not loaded by another component or another device such as the controller 190, or the like among the stored photographed data after a predetermined time.

According to the embodiment of the present invention, the dart game apparatus may include the controller 190. The controller 190 may generally control an overall operation of the dart game apparatus 100. For example, in the case of the dart game, the score sensed through the sensing module 120 is collected for each game participant, the collected score is transmitted to and received from another dart game apparatus connected through the network, and a game winning/losing record, the score, and the like according to the collected result are recorded. The controller 190 may perform pattern recognition processing to recognize a motion input, a writing input, and the like performed in the touch screen or the camera as a letter or an image. Further, the controller 190 may perform speech recognition by using a speech-to-text (STT) function to recognize the speech input through the microphone as the letter.

According to the embodiment of the present invention, when a motion of the player is sensed by an operation sensing sub unit configured in the camera module 150, the controller 190 may control the camera module 150 so that at least one camera unit among the plurality of camera units tracks and photographs the player. The controller 190 may be additionally configured to control the camera moving sub unit and the camera focus adjusting sub unit so that at least one camera unit among the plurality of camera units tracks and the photographs the dart pin 111.

Additionally, when the player is present in the image photographed by the fourth camera unit for a predetermined time before the dart pin 111 hits the dart target, the controller 190 may decide a throwing action of the dart pin 111 which hits the dart target as the cheating. In this case, the controller 190 analyzes the image photographed by the camera module 150 to determine the cheating. In detail, the controller 190 may find a contour line of the player among the images photographed from the camera module 150 (e.g., the second camera unit 152) and recognize the player by analyzing a color, a brightness, and a chroma. Further, the controller 190 may identify the player through such an analysis method and authorize an identity of the player.

Additionally, the controller 190 may decide the cheating based on one or more motion pictures photographed by one or more camera units. For example, in the case where the controller 190 senses that the player oversteps the throw line 115 through the first motion picture 401 photographed by the first camera unit 151, the controller 190 may decide the case as the cheating. Further, in the case where the controller 190 senses that another player other than a player of which an identity is authorized through the second motion picture 403 photographed by the second camera unit 152 throws the dart pin, the controller 190 may decide the case as the cheating. In addition, in the case where the dart target 110 is touched by using an object (e.g., a part of the body of the player) other than the dart pin 111 through the third motion picture 405 photographed by the third camera unit 153, the controller 190 may decide the case as the cheating. Furthermore, in the case where the controller 190 senses a dart pin other than the dart pin 111 thrown by the player through the fourth motion picture 407 photographed by the fourth camera unit 154 or another player is present in the fourth motion picture 407, the controller 190 may decide the case as the cheating. Moreover, the controller 190 is not limited to the aforementioned cheating deciding method and may decide the cheating through various methods which may be read through the plurality of motion pictures photographed by the plurality of camera units.

Furthermore, the controller 190 may control the plurality of motion pictures photographed by the plurality of camera units to be split and output on one screen through the display module 142 or to be sequentially output on one screen. Herein, a method in which the controller 190 photographs the motion picture by controlling the camera module 150 will be described below in detail in FIGS. 2, 3, 4, and 5.

As illustrated in FIG. 1, since the controller 190 may communicate with all of the other components, the controller 190 may organically control operations of the components.

Various embodiments described herein may be implemented in a computer-readable recording medium or a recording medium readable by a device similar to the computer by using, for example, software, hardware, or a combination thereof. According to hardware implementation, the embodiment described herein may be implemented by using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and electric units for performing other functions. In some cases, the embodiments described in the specification may be implemented by the controller 190 itself. According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 180 and executed by the controller 190.

FIG. 2 is an enlarged diagram illustrating a plurality of camera modules provided in the dart game apparatus according to an embodiment of the present invention.

Additional structures other than the structure of the dart game apparatus 100 illustrated in FIG. 2 may also be included in an embodiment of the present invention. Moreover, at least a part of the structure of the dart game apparatus 100 to be described in FIG. 2 may be omitted or not provided and it will be apparent to those skilled in the art that other modules may also be included in the claims of the present invention. Furthermore, although not illustrated in FIG. 2, additional variables, information and description thereof may also be included in the claims of the present invention.

As illustrated in FIG. 2, a plurality of camera units included in the camera module 150 may be positioned at a first location and a second location of the top of the front surface of the dart game apparatus 100. The first camera unit 151 may be positioned at the first location, and the first camera unit 151 is configured so as to photograph the throw line 115 which is the location where the player throws the dart and the whole body of the player. In addition, the second camera unit 152 may be positioned at the first location horizontally to the first camera unit 151, and the second camera unit 152 is configured to photograph at least a part of the body for identifying the player. Herein, the second camera unit 152 may be configured so as to enlarge and photograph an upper body or a face of the player.

Furthermore, the second location may be formed below (that is, the bottom of the first location) the first location. In addition, the third camera unit 153 may be positioned at the second location, and the third camera unit 153 is configured to photograph the entirety of the dart target. In detail, the third camera unit 153 may be disposed at lower locations for the first location and the second location of the top of the front surface of the dart game apparatus and configured so as to photograph the dart target.

Moreover, the fourth camera unit 154 may be positioned at the lower location of the third camera unit 153 at the second location, and the fourth camera unit 154 is configured so as to photograph at least a partial area in the area formed between the throw line 115 and the dart game apparatus 100 in order to photograph a dead zone which is not photographed by the first camera unit 151, the second camera unit 152, and the third camera unit 153. Herein, the camera module 150 (that is, the first camera unit 151, the second camera unit 152, the third camera unit 153, and the fourth camera unit 154) is not limited to the aforementioned location and may be present variably within the first location and the second location. Further, the camera module 150 is not configured to be limited to the first location and the second location and may be configured at various locations of the front surface of the dart game apparatus 100.

According to the embodiment of the present invention, each of the plurality of camera units may include a lens having a unique viewing angle. Herein, the lens represents an object that collects or diffuses light which comes from an object by finely grinding a surface of a transparent material such as glassspherically to form an optical image. Further, the lens configured in each of the plurality of camera units may include a macro lens, a fisheye lens, a zoom lens, and a special lens. In detail, the reason for configuring the lens having the unique viewing angle in each of the plurality of camera units is that features of scenes photographed by the respective camera units are different from each other. For example, the first camera unit 151 requires a narrow viewing angle to photograph the throw line 115 positioned far from the dart game apparatus 100 and the entirety of the body of the player and the third camera unit 153 photographs the dart target, and as a result, the third camera unit 153 requires a wider viewing angle than the first camera unit 151. The viewing angle described herein represents a range actually picked up on the screen, an angle of viewing a thing, and an area to view the screen.

Based on the aforementioned contents, in detail, the first camera unit may include a first lens that is configured on the front surface of the first camera unit to secure a view of a scene photographed at a viewing angle of 70 to 80°. Further, the second camera unit may include a second lens that is configured on the front surface of the second camera unit to secure the view of a scene photographed at a viewing angle of 30 to 40°. Furthermore, the third camera unit may include a third lens that is configured on the front surface of the third camera unit to secure the view of a scene photographed at a viewing angle of 110 to 120°. In addition, the fourth camera unit may include a fourth lens that is configured on the front surface of the fourth camera unit to secure the view of a scene photographed at a viewing angle of 70 to 80°. Herein, the fourth lens may be the same lens as the first lens.

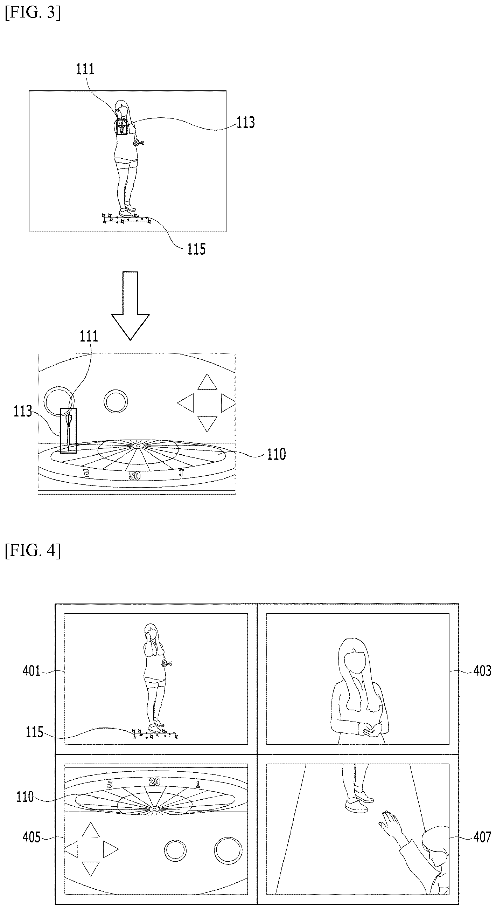

FIG. 3 illustrates a scene of sensing and tracking a dart pin in at least one camera unit among a plurality of camera units according to an embodiment of the present invention.

Since a screen illustrated in FIG. 3 and a screen of tracking the dart pin are just an example according to the embodiment of the present invention, it will be apparent to those skilled in the art that screens having different shapes or variables of different values may also be included in the claims of the present invention. Furthermore, although not illustrated in FIG. 3, additional variables, information, and a combination thereof may also be included in the claims of the present invention.

Further, the screen illustrated in FIG. 3 may be output through the display module 142 of the dart game apparatus 100 or an output unit (not illustrated) of a user terminal (that is, a referee terminal) or output from various apparatuses other than the aforementioned apparatuses and terminals.

According to the embodiment of the present invention, each of the plurality of camera units may include a camera moving sub unit configured to control a photographing direction of the camera unit. The camera moving sub unit described herein means a unit that allows the camera module 150 to operate to rotate up, down, left, and right toward the target (that is, the dart pin 111 or the player) to be photographed. Additionally, the camera moving sub unit may operate the camera module 150 so as to photograph a location designated by a user according to a command of the controller 190.

Further, each of the plurality of camera units may include the camera focus adjusting sub unit configured to control the focus of the camera unit. The camera focus adjusting sub unit described herein means a unit for readjusting the focus so that an in-focus state is maintained according to a change of a situation so as to prevent the focus from being out of focus as the target (that is, the dart pin 111 or the player) in focus is farther from or closer to the camera module 150 or with movement of the camera. Additionally the camera focus adjusting sub unit may alternately and repeatedly execute an optical zoom operation of enlarging and reducing an image of the location designated by the user with a predetermined magnification according to the command of the controller 190. Herein, the focus adjusting sub unit may adjust the focus through sonar detection or an infrared beam. In detail, the focus adjusting sub unit may operate by radiating a pulse (that is, an ultrasonic wave) of sound or light. The focus adjusting sub unit may measure how long an echo of the ultrasonic wave returns from the target (that is, the dart pin 111 or the player). Herein, the controller 190 may calculate a distance up to a target from a reference point of the velocity of sound by measuring a delay time for the echo of the ultrasonic wave. In this case, the controller 190 may adjust the focus of the camera module 150 according to the target based on the calculated distance. Additionally, the focus adjusting sub unit may measure the distance up to the target by using the infrared beam. In detail, the focus adjusting sub unit may measure the distance up to the target by a method that measures the intensity and the time of the infrared beam reflected from the object.

Additionally, at least one camera unit among the plurality of camera units may include the operation sensing sub unit configured to sense movement of the player. Herein, the operation sensing sub unit may be an occupancy proximity sensor. The occupancy proximity sensor is a sensor that detects presence of a person or the object at a predetermined specific location and may generate a signal regardless of stop or movement of the object. Further, the occupancy proximity sensor may verify presence of the target or a location, movement, cut-off, and the like of the target from a reference point and verify an appropriate location of the target. In detail, the occupancy proximity sensor may be divided into a contact type or a non-contact type and may include at least one sensor of a photoelectric sensor, an inductive proximity sensor, a capacitive proximity sensor, and an ultrasonic proximity sensor.

As described above, when the dart pin 111 is sensed by the operation sensing sub unit of at least one camera unit of the plurality of camera units, the controller 190 may be additionally configured to control the camera moving sub unit and the camera focus adjusting sub unit so as to track and the photograph the sensed dart pin 111.

Additionally, the operation sensing sub unit may be a human body sensor which is a type of an infrared sensor. Hereinafter, the human body sensor will be described in detail. All objects having a temperature higher than a zero point (-273) of an absolute temperature may emit radiant rays corresponding to the temperature and even among the objects, far infrared rays may be radiated at a lower temperature like a body temperature. The object having the higher temperature may radiate more infrared rays than an object having the lower temperature and a peak value of radiant energy may approach a short-wavelength side, that is, an area of visible light when the temperature is higher. A human surface temperature varies depending on dressing or an ambient temperature and is generally approximately 20 to 35°C and a wavelength distribution of the radiated infrared rays may form a peak approximately at 10 µm. The human body sensor may sense the presence of the player by sensing a variation of the infrared ray.

Additionally, the human body sensor may be configured in at least some camera units among the plurality of camera modules 150. In this case, the lens configured in at least some camera units in the camera module 150 may be constituted by a lens for the human body sensor to sense the motion of the person or a light collector such as a reflection mirror or the like. Since the human body sensor itself has one very wide and insensible sensing area, the human body sensor just senses only a closehuman body. The lens constituted by at least some camera units may arrange a lot of sensing areas radially by using multi-mirrors or multi-Fresnel lenses (that is, plane lenses acquired by processing a groove concentrically) in which several mirror pieces or lens pieces are combined, and a dome-type lens in order to efficiently sense the human body at a wide angle.

When the motion of the player is sensed by the human body sensor that performs the aforementioned operation, the controller 190 may be configured to control the camera moving sub unit and the camera focus adjusting sub unit so that at least one camera unit among the plurality of camera units tracks and photographs the player. Furthermore, when the player or the dart pin 111 is sensed by the camera module 150, the display module 142 may display a sensing area 113 generated by the controller 190. Herein, the sensing area 113 may be a focus frame that displays a target (that is, the dart pin 111 or a face of the player) sensed by the camera module 150. Further, when the target sensed by the camera module 150 moves, the display module 142 may track the target and display the sensing area 113. In addition, the display module 142 may display the sensing area 113 through various colors, shapes, and thicknesses.

Additionally, the controller 190 may be additionally configured to identify the player based on the image photographed by the second camera unit 152. In detail, the second camera unit 152 may be configured to enlarge and photograph the face or the upper body of the player. In addition, the controller 190 may analyze a currently photographed face or upper body image of the player. Moreover, the controller 190 may be configured to authorize the identity of the player through comparison with the face or upper body image of the player previously photographed by the second camera unit 152.

In detail, a technology for authorizing the identity of the player may be a face recognition technology. Herein, the face recognition technology represents a biometric technology that recognizes the face of the player in the image photographed through the camera module 150 and determines the player through an extraction process of the recognized face area. Furthermore, the controller 190 may use information such as brightness, movement, the color and eye location estimation in order to distinguish the face of the player photographed through the camera module 150 and a background. For example, the controller 190 may recognize the face of the player by using a difference in brightness between the face of the player photographed through the camera module 150 and the background or distances and shapes of an eye, a nose, and a mouse which are primary parts of the face. Face information of the player may be stored in the memory 180 through the controller 190. The controller 190 may finally verify the identity of the player by comparing the stored face information of the player and a pixel value of the photographed face image of the player.

According to the embodiment of the present invention, the controller 190 additionally analyzes the first image photographed by the first camera unit 151 to sense the throw line 115 in the first image. In addition, the controller 190 may be configured to add the throw line 115 which is highlighted to the first mage so as to allow the display module 142 to highlight and display the throw line 115 in displaying the first image. Further, the controller 190 may express the throw line 115 displayed in the display module 142 with various colors in order to enable the players to identify the throw line 115 at a glance. Moreover, when the controller 190 senses that the player throws the dart pin over the throw line 115, the controller 190 generates a warning sound through the sound output module 141 and highlights the throw line 115 through the display module 142 to allow the player to recognize the cheating.

According to the embodiment of the present invention, the controller 190 synthesizes the motion pictures photographed by the first camera unit 151 to the fourth camera unit 154 to generate one consecutive image data. In this case, the consecutive image data may be a panorama motion picture. Further, the controller 190 may extract the motion pictures photographed by the first camera unit 151 to the fourth camera unit 154 as a plurality of images or motion pictures and generate a panorama image through the plurality of extracted images or motion pictures. Herein, the controller 190 may generate a trajectory of the dart pin 111 in the panorama motion picture. In this case, the controller 190 may display the trajectory of the dart pin 111 by various display methods including a line, the color, and the like.

According to the aspect of the present invention, the camera module 150 may generate motion picture data acquired by photographing a process in which the dart pin 111 thrown by the player reaches the dart target 110. In this case, the camera module 150 may transfer the photographed image data to the controller 190 and the controller 190 may store the image data in the memory 180. Further, the controller 190 may transmit the image data to a dart game server (that is, a cheating determining server) through the network connection module 160. Additionally, the controller 190 may transmit the photographed image data to a DB server (not illustrated). The dart game server (not illustrated) and/or the DB server (not illustrated) may be two physically separated servers. Alternatively, the dart game server (not illustrated) and/or the DB server (not illustrated) may be one physically integrated server and be distinguished according to roles performed in the server. Further, as described above, one server may serve as both the dart game server (not illustrated) and/or the DB server (not illustrated).

FIG. 4 illustrates a motion picture splitting screen output from a display module provided in the dart game apparatus according to an embodiment of the present invention.

Since a screen illustrated in FIG. 4 and a motion picture splitting screen are just an example according to the embodiment of the present invention, it will be apparent to those skilled in the art that screens having different shapes or variables of different values may also be included in the claims of the present invention. Furthermore, although not illustrated in FIG. 4, additional variables, information, and a combination thereof may also be included in the claims of the present invention.

According to the embodiment of the present invention, the display module 142 may split at least some motion pictures among the plurality of motion pictures photographed by the plurality of camera units and output the split motion pictures on one screen. For example, the display module 142 may split and output the first motion picture 401, the second motion picture 403, the third motion picture 405, and the fourth motion picture 407 on one screen. Further, at least some motion pictures among the plurality of motion pictures may be output through one or more display modules 142. As an example, the display module 142 may include a first display module and a second display module and the first motion picture 401 and the second motion picture 403 may be output to the first display module. Consequently, the plurality of motion pictures photographed by the plurality of camera units may be output in association with the number of display modules 142.

Furthermore, a screen sequence illustrated in FIG. 4 is not predetermined and screens combined in various orders may be output by the display module 142.

According to the embodiment of the present invention, when the player is present in the image photographed by the fourth camera unit 154 for a predetermined time before the dart pin 111 hits the dart target 110, the controller 190 may be additionally configured to decide a throwing action of the dart pin 111 which hits the dart target 110 as the cheating. In detail, the controller 190 may recognize that the identified player stands at the throw line 115 through the first camera unit 151. In this case, although not illustrated in FIG. 4, a button and/or a sensor may be installed on the throw line 115. As an example, the camera module 150 may start photographing when the player presses the button with a foot or is sensed by the sensor. Herein, the controller 190 may designate a time from the moment (that is, the moment when the player presses the button with the foot or is sensed by the sensor) when the player enters the throw line to the moment when the dart pin 111 hits the dart target 110 as the predetermined time.

In this case, in the dart game apparatus 100, when a user input is sensed by the button and/or sensor installed on the throw line 115 by the aforementioned method, the first to fourth camera units may operate, and as a result, waste of power and/or data, which occurs by the camera units which are continuously activated may be reduced.

In addition, in the case where the controller 190 determines that the player (that is, another person other than the identified player) is present in the image photographed by the fourth camera unit 154 for the predetermined time, the controller 190 may decide the case as the cheating. Moreover, in the case where the controller 190 determines that at least a part of a body of the player (that is, another person other than the identified player) is present in the image photographed by the fourth camera unit 154 for the predetermined time, the controller 190 may decide the case as the cheating. Additionally, even in the case where the controller 190 determines that at least a part of the body of the player is present in the image (that is, an image acquired by photographing the entirety of the dart target) photographed by the third camera unit 153 for the predetermined time, the controller 190 may decide the case as the cheating.

In an additional aspect of the present invention, the controller 190 may downsample a motion picture image quality received from the camera module 150 at a predetermined ratio. The downsampling described herein represents a function toreduce and generate a resolution of the motion picture. Additionally, the controller 190 selects one method of average downsampling, bicubic downsampling, and sub sampling to downsample the received motion picture image quality. Further, the aforementioned downsampling method may be executed in the server (that is, the cheating determining server) and the DB server other than the dart game apparatus 100. The reason for executing the downsampling is to store a large quantity of motion pictures in the memory 180.

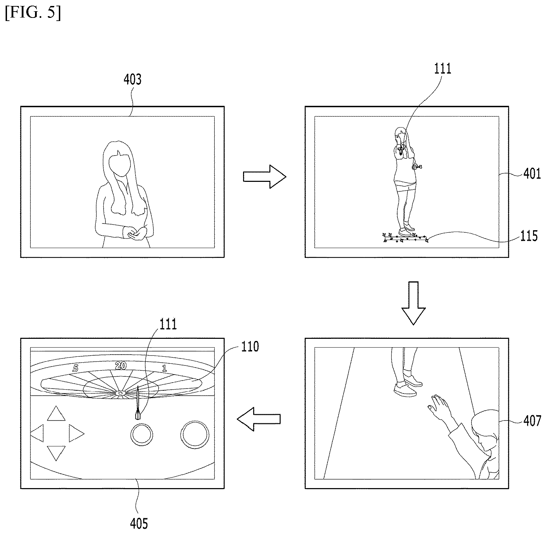

FIG. 5 illustrates a screen in which motion pictures are sequentially output from the display module provided in the dart game apparatus according to an embodiment of the present invention.

Since a screen illustrated in FIG. 5 and a screen on which motion pictures are sequentially output are just an example according to the embodiment of the present invention, it will be apparent to those skilled in the art that screens having different shapes or variables of different values may also be included in the claims of the present invention. Furthermore, although not illustrated in FIG. 5, additional variables, information, and a combination thereof may also be included in the claims of the present invention.

According to the embodiment of the present invention, the display module 142 may sequentially output the plurality of motion pictures photographed by the plurality of camera units on one screen according to a predetermined order.

Herein, the controller 190 may output the second motion picture 403 acquired by photographing at least a part of the body of the player by the second camera unit 152 through the display module 142. This is to verify whether the player is a player that performs the dart game before throwing the dart pin 111. As an example, the controller 190 may recognize the face of the player and verify the identity of the player (see FIG. 3).

In addition, the controller 190 may output the first motion picture 401 acquired by photographing the throw line 115 and the whole body of the player by the first camera unit 151 through the display module 142. Further, the first motion picture 401 may be a motion picture for photographing a throwing location and a throwing attitude of the dart pin 111 by the player. Moreover, the reason for photographing the first motion picture 401 is to verify the cheating of the player which throws the dart pin 111. As an example, the first motion picture 401 may be a motion picture photographed to verify whether the player throws the dart pin 111 over the throw line 115. Further, the first motion picture 401 may be a motion picture photographed to verify whether the player does not overstep the throw line 115 at the moment of throwing the dart pin 111 but oversteps the throw line 115 after throwing the dart pin 111. In this case, a motion picture photographed to verify whether the player oversteps the throw line 115 after throwing the dart pin may be the fourth motion picture 407. Furthermore, the reason for photographing the first motion picture 401 is to verify a situation (for example, whether to use a dart pin throwing apparatus, and the like) other than the aforementioned cheating.

Therefore, the controller 190 may sequentially output the third motion picture 405 acquired by photographing the entirety of the dart target by the third camera unit 153 and the fourth motion picture 407 acquired by photographing at least a partial area in the area formed between the throw line 115 and the dart game apparatus 100 by the fourth camera unit 154 through the display module 142. Herein, the order of the third motion picture 405 and the fourth motion picture 407 may be variably changed. Further, herein, the third motion picture 405 and the fourth motion picture 407 may be split and output on one screen.

In one or more exemplary implementations, functions presented here may be implemented through hardware, software, firmware, or a combination thereof. When the functions are implemented by the software, the functions may be stored in a computer-readable medium as one or more commands or codes or transmitted therethrough. The computer-readable medium includes a computer storage medium and a communication medium including a predetermined medium for easily transferring a computer program from one place to another place. The storage medium may be a predetermined available medium which may be accessed by a universal computer or a special-purpose computer. For example, the computer-readable medium includes a RAM, a ROM, an EEPROM, a CD-ROM, or other optical disk storage media, a magnetic disk storage medium, or other magnetic storage devices or predetermined other media which may be used to store program code means required as a form of a command or data structure and accessed by a universal computer, a special-purpose computer, a universal processor, or a special processor, but is not limited thereto. Further, predetermine connection means may be regarded as the computer-readable medium. For example, when software is transmitted from a website, a server, or another remote source through wireless technologies such as a coaxial cable, an optical fiber cable, a flexible wire, a digital subscriber line (DSL), or infrared radio, and microwaves, the wireless technologies such as the coaxial cable, the optical fiber cable, the flexible wire, the DSL, or infrared radio, and the microwaves may be included in definition of the medium. Disk and disc used herein include a compact disc (CD), a laser disc, an optical disc, a DVD, a floppy disk, a Blu-ray disc and herein the disk magnetically reproduces data, while the disc optically reproduces data through a laser. The combinations may also be included in the range of the computer-readable medium.

It will be well appreciated by those skilled in the art that various exemplary elements, components, logic blocks, modules, and algorithm steps may be implemented by electronic hardware, computer software, or a combination thereof. In order to clarify mutual compatibility of hardware and software, various exemplary elements, blocks, modules, and steps are described in functional viewpoints thereof. Whether such a function is implemented by the hardware or the software depends on design limitations given to a specific application and an entire system. Those skilled in the art may implement the functions by various methods with respect to respective specific applications, but the implementation determination does not depart from the scope of the present invention.

Various exemplary logic blocks and modules disclosed in association with the disclosure may be implemented or performed through a universal processor, a digital signal processor (DSP), an application specific integrated circuit (ASIC), a field programmable gate array (FPGA), or other programmable logic device, discrete gate or transistor logic, discrete hardware components, or a predetermined combination designed to implement the functions disclosed herein. The universal processor may be a microprocessor, but in an alternative embodiment, the processor may be a processor, a controller, a micro controller, or a state machine in the related art. The processor may be implemented as, for example, combinations of calculation devices such as the DSP and the microprocessor, a plurality of microprocessors, one or more microprocessors coupled with a DSP core, or a combination of the components.

In respect to hardware implementation, various exemplary logics, logic blocks, and modules of processing units described in association with aspects disclosed herein may be implemented in one or more ASICs, DSPs, DSPDs, programmable logic devices (PLDs), FPGAs, discrete gate or transistor logic, discrete hardware components, universal-purpose processors, controllers, micro-controllers, microprocessors, other electronic units designed to perform the functions described herein, or a combination thereof. The universal-purpose processor may be the microprocessor, but alternatively, the universal-purpose processor may be a predetermined conventional processor, controller, microcontroller, or state machine. The processor may also be implemented as combinations (e.g., combinations of the DSP and the microprocessor, the plurality of microprocessors, and one or more microprocessors associated with the DSP core, or a predetermined other appropriate configuration) of computing devices. Additionally, at least one processor may include one or more modules which may implement one or more steps and/or operations among the steps and/or operations described herein.

Moreover, various aspects or features described herein can be implemented as methods, apparatuses, or manufactured articles using stand programming and/or engineering techniques. Steps and/or operations of a method or algorithm described in association with the aspects disclosed herein can be directly implemented as hardware, a software module executed by a processor, a combination thereof. Additionally, in some aspects, the steps or operations of the method or algorithm can be present as at least one or predetermined combination of sets of codes or commands on a machine-readable or computer-readable medium and this can be integrated into a computer program article. The terms manufactured article as used herein is intended to include a computer program accessible by a predetermined appropriate computer-readable device or medium.

The description of the presented embodiments is provided so that those skilled in the art of the present invention use or implement the present invention. Various modifications of the embodiments will be apparent to those skilled in the art and general principles defined herein can be applied to other embodiments without departing from the scope of the present invention. Therefore, the present invention is not limited to the embodiments presented herein, but should be analyzed within the widest range which is consistent with the principles and new features presented herein.

### [Mode for Invention]

Associated contents in a best mode for carrying out the present invention have been described.

### [Industrial Applicability]

The present invention can be used in a digital device, a dart device, a dart game device, an entertainment device, a dart server, and the like.

## Claims

1. A dart game apparatus comprising:
a dart target having a plurality of score areas;
a sensing module configured to sense an electrical signal changed as a dart pin hits the dart target;
a controller configured to control an overall operation of the dart game apparatus; and
a camera module configured to include a plurality of camera units,
wherein the camera module includes
a first camera unit configured to photograph a throw line which is a location where a player throws a dart and a whole body of the player,
a second camera unit configured to photograph at least a part of a body for identifying the player,
a third camera unit configured to photograph the entirety of the dart target, and
a fourth camera unit configured to photograph at least a partial area in an area formed between the throw line and the dart game apparatus in order to photograph a blind zone which is not photographed by the first camera unit, the second camera unit, and the third camera unit.

2. The dart game apparatus of claim 1, wherein each of the plurality of camera units includes
a camera moving sub unit configured to control a photographing direction of the camera unit, and
a camera focus adjusting sub unit configured to control a focus of the camera unit.

3. The dart game apparatus of claim 1, wherein the controller is additionally configured to control a camera moving sub unit and a camera focus adjusting sub unit so that at least one camera unit among the plurality of camera units tracks and the photographs the dart pin.

4. The dart game apparatus of claim 3, wherein at least one camera unit among the plurality of camera units includes
an operation sensing sub unit configured to sense a motion of the player, and
the controller is configured to control the camera moving sub unit and the camera focus adjusting sub unit so that at least one camera unit among the plurality of camera units tracks and photographs the player when the motion of the player is sensed by the operation sensing sub unit.

5. The dart game apparatus of claim 1, further comprising:
one or more display modules configured to output a plurality of motion pictures photographed by the plurality of camera units.

6. The dart game apparatus of claim 5, wherein the display module is additionally configured to split at least some motion pictures among the plurality of motion pictures photographed by the plurality of camera units and output the split motion picture on one screen.

7. The dart game apparatus of claim 5, wherein the display module is additionally configured to sequentially output the plurality of motion pictures photographed by the plurality of camera units on one screen according to a predetermined order.

8. The dart game apparatus of claim 7, wherein the display module is additionally configured to sequentially output on the one screen
a second motion picture acquired by photographing at least a part of a body of the player by the second camera unit,
a first motion picture acquired by photographing the throw line and the whole body of the player by the first camera unit,
a third motion picture acquired by photographing the entirety of the dart target by the third camera unit, and
a fourth motion picture acquired by photographing at least a partial area in the area formed between the throw line and the dart game apparatus by the fourth camera unit.

9. The dart game apparatus of claim 1, wherein the first camera unit includes
a first lens configured on a front surface of the first camera unit to secure a view of a scene photographed at a viewing angle of 70 to 80°,
the second camera unit includes a second lens that is configured on a front surface of the second camera unit to secure the view of a scene photographed at a viewing angle of 30 to 40°,
the third camera unit includes a third lens that is configured on a front surface of the third camera unit to secure the view of a scene photographed at a viewing angle of 110 to 120°, and
the fourth camera unit includes a fourth lens that is configured on a front surface of the fourth camera unit to secure the view of a scene photographed at a viewing angle of 70 to 80°.

10. The dart game apparatus of claim 1, wherein the first camera unit is disposed at a first location of the top of a front surface of the dart game apparatus and configured so as to photograph the whole body of the player and the throw line,
the second camera unit is disposed at a second location horizontal to the first location on the top of the front surface of the dart game apparatus and configured so as to enlarge and photograph an upper body or a face of the player,
the third camera unit is disposed at lower locations for the first location and the second location of the top of the front surface of the dart game apparatus and configured so as to photograph the dart target, and
the fourth camera unit is disposed at a lower location for a third location on the top of the front surface of the dart game apparatus and configured so as to photograph a blind zone between the dart game apparatus and the throw line, which is not photographed by the first, second, and third camera units.

11. The dart game apparatus of claim 1, wherein the controller is additionally configured to identify the player based on the image photographed by the second camera unit.

12. The dart game apparatus of claim 1, wherein when the player is present in the image photographed by the fourth camera unit for a predetermined time before the dart pin hits the dart target, the controller is additionally configured to decide a throwing action of the dart pin which hits the dart target as a cheating.

13. The dart game apparatus of claim 1, wherein the control module is additionally configured to analyze a first image photographed by the first camera unit to sense the throw line in the first image, and
add the throw line which is highlighted to the first image so as to allow the display module to highlight and display the throw line in displaying the first image.

14. The dart game apparatus of claim 1, wherein the second camera unit is additionally configured to enlarge and photograph the face or the upper body of the player, and
the control module is additionally configured to analyze a currently photographed face or upper body image of the player and compare the face or upper body image of the player with a face or upper body image of the player, which is previously photographed by the second camera unit to authorize an identity of the player.

15. A computer program stored in a computer-readable medium, which allows a computer to perform the following steps, wherein the steps comprises:
photographing at least a partial area in a front area of a dart game apparatus by using a camera module including a plurality of camera units; and
sensing an electrical signal changed as a dart pin hits a dart target having a plurality of score areas, and
the camera module includes
a first camera unit configured to photograph a throw line which is a location where a player throws a dart and a whole body of the player,
a second camera unit configured to photograph at least a part of a body for identifying the player,
a third camera unit configured to photograph the entirety of the dart target, and
a fourth camera unit configured to photograph at least a partial area in an area formed between the throw line and the dart game apparatus in order to photograph a blind zone which is not photographed by the first camera unit, the second camera unit, and the third camera unit.
